Europäisches Patentamt

European Patent Office

Office européen des brevets

(11) Veröffentlichungsnummer: **0 359 908**
**A1**

## (12) EUROPÄISCHE PATENTANMELDUNG

(21) Anmeldenummer: 89109810.5

(22) Anmeldetag: 31.05.89

(51) Int. Cl.5: **F42C 17/04 , G01P 3/66**

(30) Priorität: 08.09.88 DE 3830518

(43) Veröffentlichungstag der Anmeldung:
28.03.90 Patentblatt 90/13

(84) Benannte Vertragsstaaten:
CH DE FR GB LI NL

(71) Anmelder: **Rheinmetall GmbH**
**Ulmenstrasse 125 Postfach 6609**
**D-4000 Düsseldorf(DE)**

(72) Erfinder: **Nahrwold, Klaus Hermann**
**Heidberg 3**
**D-3102 Hermannsburg(DE)**

(74) Vertreter: **Podszus, Burghart, Dipl.-Phys.**
**Rheinmetall GmbH Ulmenstrasse 125**
**Postfach 6609**
**D-4000 Düsseldorf(DE)**

(54) Vorrichtung zur Einstellung eines Geschosszeitzünders.

(57) Es wird eine Vorrichtung zur Einstellung eines Geschoßzeitzünders beschrieben, wobei die Mündungsgeschwindigkeit des Geschosses (20) gemessen und die Laufzeit durch den Meßwert der Mündungsgeschwindigkeit korrigiert wird. Zur Ermittlung der Mündungsgeschwindigkeit des Geschosses (20) weist dieses einen Magnetfeldsensor (22) und das Geschützrohr (10) einen ersten Magnetfeldgeber (12) auf.

Um die Geschoßgeschwindigkeit mit relativ geringem apparativen Aufwand sehr genau zu ermitteln, wird vorgeschlagen, daß an dem Geschützrohr (10) ein zweiter Magnetfeldgeber (11) angeordnet ist, und daß der Empfangssensor 1(22) über einen Verstärker (31) mit einem Start-Stopp-Zähler (32) verbunden ist. Gestartet wird der Zähler (32), wenn das Geschoß (20) an dem zweiten Magnetfeldgeber (11) vorbeifliegt. Gestoppt wird der Zähler (32), wenn das Geschoß (20) an dem ersten Magnetfeldgeber (12) vorbeifliegt. Der Inhalt des Zählers (32) bestimmt dann die Taktfrequenz, mit der ein voreingestellter Rückwärtszähler (38) ausgezählt wird.

FIG. 1

## Vorrichtung zur Einstellung eines Geschoßzeitzünders

Die Erfindung betrifft eine Vorrichtung, wie sie im Oberbegriff des Anspruchs 1 näher definiert ist.

Derartige Vorrichtungen sind beispielsweise aus der DE-AS 26 05 374 bekannt. Bei dieser bekannten Vorrichtung wird mit Hilfe einer am Waffenrohr befestigten Triggerspule ein Impuls ausgelöst wenn das Geschoß diese Spule durchfliegt. Dieser Impuls wird einem Prozeßrechner zugeführt und gibt beim Durchflug des Geschosses diesem das Signal, die notwendigen Informationen zu berechnen und an ein Übertragungsgerät weiterzuleiten. Das Übertragungsgerät aktiviert dann den Magnetfeldgeber, welcher über den Magnetfeldsensor die Information an den im Geschoß befindlichen Zünder überträgt. Nachteilig bei dieser bekannten Anordnung ist vor allem der schaltungsmäßig relativ große Aufwand für den Prozeßrechner und das Übertragungsgerät.

Aus der DE 33 07 785 A1 ist ferner ein Verfahren und eine Vorrichtung zur Einstellung eines Geschoßzünders bekannt, bei dem die Geschwindigkeitsmessung des Geschosses dadurch erfolgt, daß der im Geschoß angeordnete Empfangssensor an zwei im Geschützrohr angeordneten ringförmigen Nuten vorbeifliegt.

Dadurch wird ein Oszillator verstimmt und liefert Meßimpulse zur Bestimmung der Mündungsgeschwindigkeit. Durch die Anwendung des Prinzips des Vorwärts-Rückwärts-Zählers im Zünder kann der Zünder mit einem Taktgenerator mit begrenzten Stabilitätsanforderungen versehen werden. Nachteilig bei dieser bekannten Anordnung ist vor allem die relativ ungenaue Messung der Geschwindigkeit, weil die maximale Frequenz des Taktgenerators 50 MHz und damit die zeitliche Auflösung lediglich 20 ns beträgt. Außerdem strahlt der Sensor Hochfrequenzwellen ab, so daß das Geschoß durch feindliche Funkmeßeinrichtungen ortbar ist.

Schließlich ist aus der DE 34 04 011 A1 eine Anordnung bekannt, mit der die Geschwindigkeit eines Geschosses dadurch erfolgt, daß zwei in der Rohrwandung angebrachte Ringnuten als Meßbasis für eine Mikrowellen-Sende-Empfangseinrichtung dienen. Die Sende- und Empfangseinrichtung ist dabei in der Spitze des Geschosses untergebracht, wo auch die Auswertung erfolgt. Auch bei dieser bekannten Vorrichtung besteht der Nachteil u. a. darin, daß ein aktiver Sensor verwendet wird, der durch Funkmeßeinrichtungen ortbar ist.

Der vorliegenden Erfindung liegt daher die Aufgabe zugrunde, eine Vorrichtung der eingangs erwähnten Art derart weiterzuentwickeln, daß die Geschoßgeschwindigkeit mit relativ geringem apparativen Aufwand sehr genau ermittelt werden kann (Größenordnung der Genauigkeit: 0,1 °/oo bis 0,2

°/oo).

Diese Aufgabe wird erfindungsgemäß durch die Merkmale des kennzeichnenden Teils des Anspruchs 1 gelöst.

Weitere Vorteile der Erfindung ergeben sich aus den Unteransprüchen.

Der Erfindung liegt also im wesentlichen der Gedanke zugrunde, daß die große Meßgenauigkeit dadurch erreicht wird, daß einerseits zwei Magnetfeldgeber verwendet werden und andererseits die Geschoßgeschwindigkeit nicht in einem Prozeßrechner, sondern in einer Schaltung im Geschoß selbst ermittelt wird.

Weitere Einzelheiten und Vorteile der Erfindung ergeben sich aus den im folgenden näher beschriebenen Ausführungsbeispielen, die mit Hilfe von Figuren näher erläutert werden.

Es zeigen:

Fig. 1 schematisch eine erfindungsgemäße Anordnung von Geschützrohr und Geschoß;

Fig. 2 das Ausführungsbeispiel eines Magnetfeldgebers;

Fig. 3 ein Ausführungsbeispiel eines Magnetfeldsensors;

Fig. 4 eine erfindungsgemäße Schaltungsvorrichtung zur Ansteuerung der Zündeinrichtung;

Fig. 5 ein Ausführungsbeispiel eines regelbaren Oszillators für die Schaltungsvorrichtung nach Fig. 4 und

Fig. 6 das Ausführungsbeispiel eines Ringresonators für die Schaltungsvorrichtung nach Fig. 5.

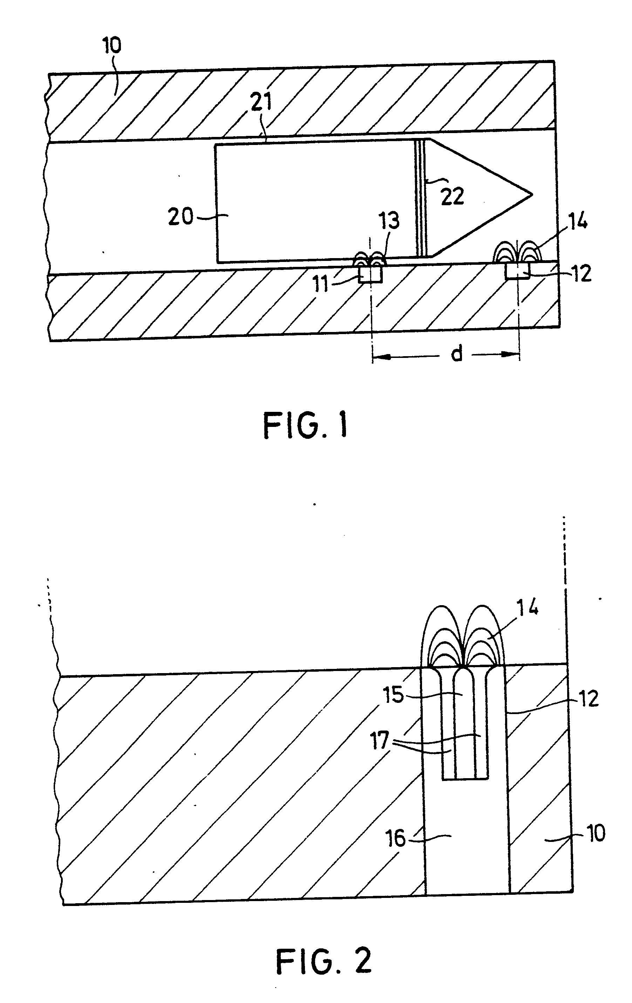

In Fig. 1 ist mit 10 der mündungsseitige Teil eines Geschützrohres bezeichnet, das von einem Geschoß 20 passiert wird. In die Rohrwandung des Geschützrohres 10 sind zwei Magnetfeldgeber 11 und 12 eingelassen, die im Inneren des Rohres definierte Magnetfelder 13 und 14 erzeugen. Der Abstand d der Magnetfeldgeber zueinander legt die Meßbasis fest und beträgt beispielsweise ca. 100 mm.

In der Hülle 21 des Geschosses 20 befindet sich ein rotationssymmetrischer Magnetfeldsensor 22, der bei jedem Durchtritt durch ein Magnetfeld Spannungsimpulse erzeugt. Die Zeitdifferenz zwischen den Spannungsimpulsen ist ein Maß für die Geschwindigkeit.

In Fig. 2 ist eine mögliche Ausführungsform eines Magnetfeldgebers 12 dargestellt. Ein weitgehend temperatur- und schockbeständiger Permanentmagnet 15 ist in eine Halterung 16 aus magnetisch weichem Material angeordnet. Zwischen dem Permanentmagneten 15 und der Halterung 16 befindet sich ein Material 17, das den Permanentmagneten 15 gegenüber der Halterung 16 magnetisch isoliert. Als Permanentmagnet wird beispielsweise Ticonam verwendet. Die Halterung 16 besteht aus Eisen. Als isolierendes Material 17 wird beispielsweise Messing verwendet.

Der Permanentmagnet 15 und die Halterung 16 sind an der Rohrinnenseite eiförmig abgerundet. Durch diese Maßnahme sind die Magnetfelder homogener und reichen weiter in das Rohrinnere hinein.

Mit einem geeigneten Magnetfeldsensor 22 und der entsprechenden Auswerteelektronik 30 ist es möglich, sehr genau die Mittelachse des Magnetfeldgebers 11 auszumessen.

Für den Magnetfeldgeber 11 kann anstatt des Permanentmagneten 15 auch ein Elektromagnet verwendet werden.

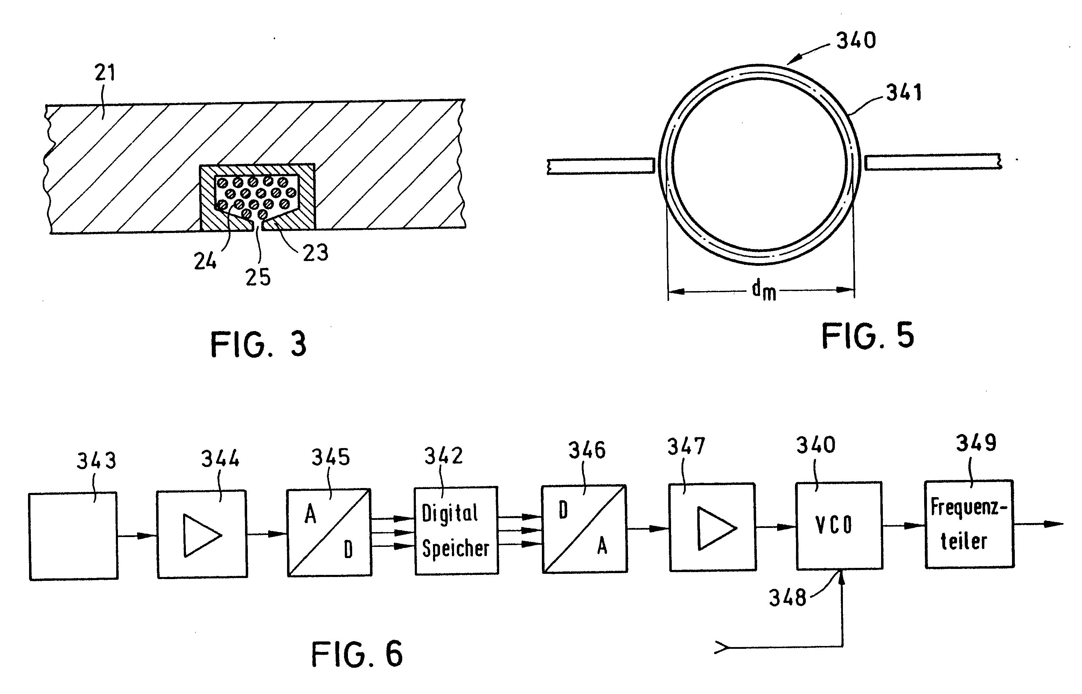

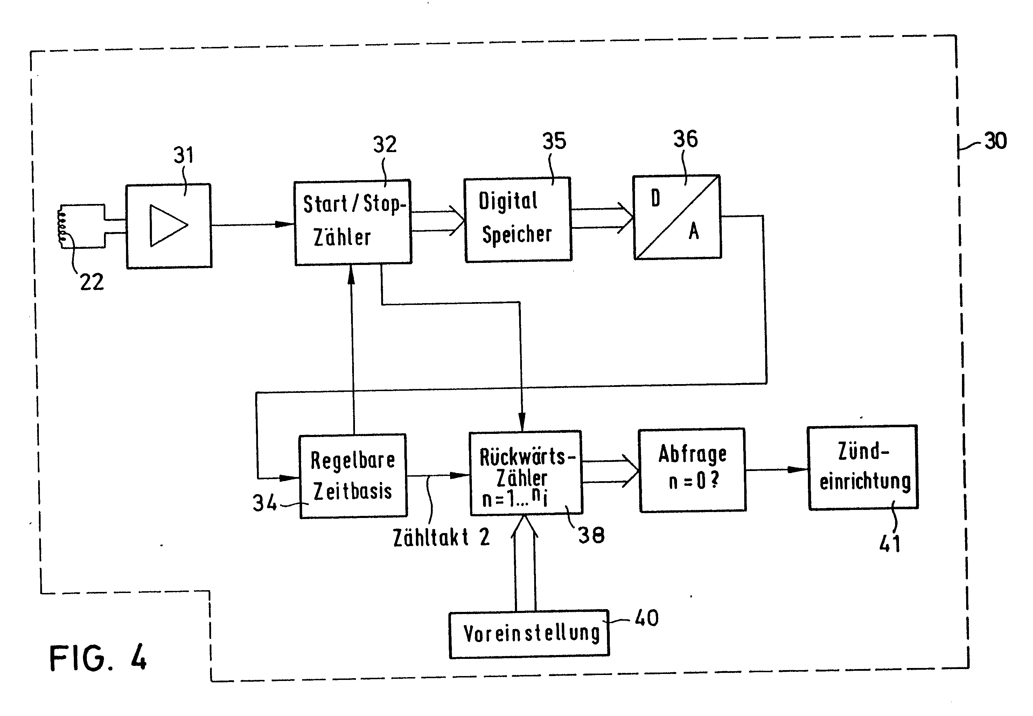

In Fig. 3 ist der mechanische Aufbau des Magnetfeldsensors 22 im Schnitt zu sehen. Um eine möglichst hohe räumliche Auflösung zu erhalten, ist eine Spule 24 mit einem weichmagnetischem Material 23 (z. B. Eisen) umgeben, welches die Magnetfelder difiniert um die Spule lenkt. Der Magnetfeldsensor hat an der Außenseite einen Schlitz 25 mit einer Breite von ca. 0,1 mm. Die räumliche Auflösung liegt dann unter 0,1 mm.

Die Elektronik zum Verarbeiten der von dem Magnetfeldsensor 22 gelieferten Signale ist in Fig. 4 schematisch dargestellt und wird im folgenden näher beschrieben:

Der Magnetfeldsensor ist über einen Verstärker 31 mit einem Start-Stopp-Zähler 32 verbunden. Mit dem ersten, vom Magnetfeldsensor 22 gelieferten Impuls beginnt der Start-Stopp-Zähler 32 die von einer regelbaren Zeitbasis 34 gelieferten Taktimpulse (Zähltakt 1) zu zählen. Die Taktintervallzeit des Zähltaktes sollten in der Größenordnung von 10 ns liegen, um auch bei kleinen Meßbasen eine ausreichende zeitliche Auflösung zu erhalten.

Das Zählen der Taktimpulse wird durch den zweiten, vom Magnetfeldsensor 22 gelieferten Impuls gestoppt. Gleichzeitig wird der Zählerstand an einen Digitalspeicher 35 weitergeleitet und dient dort als Adresse.

Unter dieser Adresse ist im Digitalspeicher digital eine Regelspannung abgespeichert, die über einen Digital/Analogwandler der regelbaren Zeitbasis 34 zugeführt wird. Mit der Regelspannung wird die Zeitbasis 34 so verstimmt, daß die Laufzeit des Zeitzünders 41 der realen Mündungsgeschwindigkeit angepaßt wird. Das bedeutet: ist die Mündungsgeschwindigkeit geringer als die erwartete, so wird die Taktintervallzeit (Zähltakt 2) entsprechend verlängert. Ist die Mündungsgeschwindigkeit höher als erwartet, so wird die Taktintervallzeit geringer. Die Taktintervallzeit des Zähltaktes 2 liegt je nach der Geschwindigkeit des Geschosses 20 in der Größenordnung zwischen 10 und 100 μs. An die Genauigkeit der Taktintervallzeiten des Zähltaktes 1 und des Zähltaktes 2 werden sehr hohe Anforderungen gestellt. Sie müssen mit einer Toleranz von wenigstens 0,1 % konstant gehalten werden. Dies ist nur mit einer Zeitbasis in Mikrowellentechnik zu erreichen. Eine entsprechende Schaltung wird weiter unten beschrieben.

Der Zeitbasis 34 nachgeschaltet ist ein einfacher Rückwärtszähler 38. Dieser Rückwärtszähler wird entsprechend dem Geschoßtyp und einer mittleren Mündungsgeschwindigkeit mit Hilfe einer Einrichtung (z. B. Kodierzähler) 40 voreingestellt. Mit dem zweiten vom Magnetfeldsensor 22 gelieferten Impuls beginnt der Rückwärtszähler 38 die Impulse des Zähltaktes 2 rückwärts zu zählen.

Hat der Rückwärtszähler die Zahl 0 erreicht, erfolgt die Zündung, d. h. es wird ein entsprechender Impuls der Zündeinrichtung zugeführt.

Die Vorteile dieser Einrichtung sind insbesondere:
- An der Waffe sind keine großen Änderungen nötig. Die Magnetfeldgeber können in eine Gewindebohrung (10 mm Feingewinde) eingeschraubt werden.
- Die Magnetfeldsensoren sind rotationssymmetrisch. Das Geschoß kann daher in jeder Lage geladen werden, und diese Einrichtung kann bei Glattrohrwaffen sowie bei drallstabilsierten Geschossen eingesetzt werden.
- Die Magnetfeldsensoren sind sehr klein (ca. 3 mm tief und 3 mm breit). Sie können daher leicht ins Geschoßgehäuse oder in den Treibkäfig eingearbeitet werden.
- Durch die Verwendung einer Zeitbasis in Mikrowellentechnik ist eine hohe Genauigkeit über den gesamten Temperaturbereich von ca. -40°C bis ca. 60°C gewährleistet.
- Die Zünderlaufzeit beginnt exakt wenn der Magnetfeldsensor 22 den zweiten Magnetfeldgeber 14 passiert.

Im folgenden wird ein besonders vorteilhaftes Ausführungsbeispiel für eine abschußfeste hochgenaue Zeitbasis in Mikrowellentechnik beschrieben:

Fig. 5 zeigt den frequenzbestimmenden Teil der regelbaren Zeitbasis 34 (Fig. 4) einen sogenannten Ringresonators 340 in Streifenleitertechnik. Der Ringresonator 340 besteht im wesentlichen aus einer ringförmigen Leiterbahn 341 aus Kupfer, dessen mittlerer Durchmesser $d_m$ die Resonanzfrequenz bestimmt. Dieser Ringresonator 340 kann aufgrund seines mechanischen Aufbaus, selbst durch extrem hohe Beschleunigung, weder verstimmt noch zerstört werden. Die übrigen Bauelemente des Oszillators (Transistorenwiderstände, Kondensatoren etc.) sind auf einer - nicht dargestellten - Leiterplatte verlötet und in Epoxydharz vergossen, ebenfalls abschußfest. Derartige Mikrowellenoszillatoren sind an sich bekannt, so daß auf ihre Funktikon nicht näher eingegangen zu werden braucht.

Dem Oszillator ist ein Trennverstärker nachzuschalten, damit nachfolgende Schaltkreise durch Änderung der Belastung nicht auf den Oszillator zurückwirken können. Diese Aufgabe kann beispielsweise der dem Oszillator nachzuschaltende Frequenzteiler übernehmen.

Den größten Einfluß auf die Oszillatorfrequenz hat allerdings die Temperatur. Die elektrischen Daten sämtlicher Bauteile des Oszillators 340 sind temperaturabhängig. Dieser Einfluß ließe sich durch Stabilisieren der Betriebstemperatur gering halten. Hierzu ist jedoch ständig eine Leistung notwendig, die den Oszillator je nach Umgebungstemperatur kühlt oder wärmt. In einem Geschoß ist eine Stabilisierung der Temperatur nicht oder nur schwer möglich.

Sinnvoller ist die Verwendung der an sich bekannten "digitalen Kompensation".

In Fig. 6 ist ein Mikrowellenoszillator 340 mit digitaler Kompensation dargestellt. Die Schaltung arbeitet nach folgendem Prinzip:

Die gesamte in Fig. 6 dargestellte Schaltung wird über den gesamten Temperaturbereich vermessen und dabei die Regelspannung bestimmt, die den Oszillator 340 wieder auf seine Sollfrequenz bringt. Diese Regelspannung wird digital in den Speicher 342 eingeschrieben (vgl. z. B. Rainer Unverdross "Digital temperaturkompensierte Quarzoszillatoren" Elektronik Industrie 4 - 1988, S. 89 ff).

Mit einem Temperaturfühler 343 wird die Temperatur der Oszillatorschaltung gemessen und in eine proportionale Spannung umgewandelt. Diese Spannung wird in dem Verstärker 344 verstärkt und durch einen Analog/Digitalwandler 345 in eine der Temperatur entsprechende Digitalzahl umgewandelt. Diese Digitalzahl ist die Adresse unter der die Regelspannung für die gemessene Temperatur in digitaler Form gespeichert ist. Der Digital/Analogwandler 346 wandelt das digitale Signal wieder in eine analoge Regelspannung um. Über einen Verstärker 347 wird die Regelspannung dem Oszillator 340 zugeführt. Über einen zweiten Steuereingang 348 am Oszillator 340 kann die Frequenz variiert werden, um z. B. Schwankungen der Mündungsgeschwindigkeiten auszugleichen.

Die digitale Kompensation hat den besonderen Vorteil, daß die temperaturabhängigen Änderungen aller im Mikrowellenoszillator vorhandenen Bauelemente berücksichtigt und damit kompensiert werden. Benutzt man einen üblichen Digitalspeicher mit 256 Speicherplätzen und acht bit Wortlänge und überstreicht man einen Temperaturbereich von 100°C, so beträgt die Auflösung weniger als 0,4°C. Das bedeutet in einem Temperaturbereich von z. B. -40 bis +60°C ist die Verstimmung der Sollfrequenz des Oszillators nur so groß, wie sie bei einer Temperaturschwankung von 0,4°C auftreten würde.

Die Genauigkeit der Zeitbasis liegt im gesamten Temperaturbereich unter 0,1 °/oo.

Bezugszeichenliste

10 Geschützrohr
11 Magnetfeldgeber
12 Magnetfeldgeber
13 Magnetfeldlinien
14 Magnetfeldlinien
15 Permanentmagnet
16 magnetisch weiche Materialeinlage
17 magnetisch isolierendes Material
20 Geschoß
21 Geschoßhülle
22 Magnetfeldsensor
23 magnetisch weiche Materialeinlage
24 Windungen
25 Schlitz
30 elektronische Schaltungsvorrichtung
31 Verstärker
32 Start/Stopp-Zähler
33 elektrische Leitung
34 regelbare Zeitbasis
35 digitaler Speicher
36 D/A-Wandler
37 elektrische Leitung
38 Rückwärtszähler
39 elektrische Leitung
40 Voreinstellung
41 Zündeinrichtung
340 Ringresonator
341 Leiterbahn
342 digitaler Speicher
343 Temperatursensor
344 erster Verstärker
345 A/D-Wandler
346 D/A-Wandler
347 zweiter Verstärker
348 Modulationseingang
349 Frequenzteiler

**Ansprüche**

1. Vorrichtung zur Einstellung eines Geschoßzeitzünders, wobei die Mündungsgeschwindigkeit des Geschosses (20) gemessen und die Laufzeit durch den Meßwert der Mündungsgeschwindigkeit korrigiert wird, und wobei zur Messung der Mündungsgeschwindigkeit das Geschoß (20) einen mit einem Verstärker (31) verbundene Magnetfeldsensor (22) aufweist und an dem Geschützrohr (10) ein erster Magnetfeldgeber (12) angeordnet ist, **dadurch gekennzeichnet,** daß an dem Geschützrohr (10) ein zweiter Magnetfeldgeber (11) angeordnet ist, und daß der Empfangssensor (22) über den Verstärker (31) mit einem Start-Stopp-Zähler (32) verbunden ist, welcher Taktimpulse zu zählen beginnt, wenn das Geschoß (20) an dem zweiten Magnetfeldgeber (11) vorbeifliegt und welcher aufhört zu zählen, wenn das Geschoß (20) an dem ersten Magnetfeldgeber (12) vorbeifliegt.

2. Vorrichtung nach Anspruch 1, **dadurch gekennzeichnet**, daß der Magnetfeldgeber (11, 12) einen Permanentmagneten oder Elektromagneten (15) enthält, der sich in einer Halterung (16) befindet, wobei der Permanentmagnet oder der Elektromagnet (15) und die Halterung (16) an der Innenseite des Geschützrohres (10) eiförmig abgerundet und voneinander magnetisch isoliert sind.

3. Vorrichtung nach Anspruch 1, **dadurch gekennzeichnet**, daß der Magnetfeldsensor (22) eine Spule (24) enthält, um die eine Hülle (23) aus weichmagnetischem Material angeordnet ist, und daß die Hülle aus weichmagnetischem Material (23) an der Geschoßaußenseite einen Schlitz (25) aufweist.

4. Vorrichtung nach Anspruch 3, **dadurch gekennzeichnet**, daß der Schlitz (25) eine Breite von etwa 0,1 mm aufweist.

5. Vorrichtung einem der Ansprüche 1 bis 4, **dadurch gekennzeichnet**, daß der Zähltakt des Start-Stopp-Zählers (32) mit Hilfe einer regelbaren Zeitbasis (34) erzeugt wird.

6. Vorrichtung nach Anspruch 5, **dadurch gekennzeichnet**, daß der Start-Stopp-Zähler (32) über einen Digitalspeicher (35) und einen D/A-Wandler (36) mit der regelbaren Zeitbasis (34) verbunden ist, und daß die regelbare Zeitbasis (34) über einen Rückwärtszähler (38) mit der Zündeinrichtung (41) in Verbindung steht.

7. Vorrichtung nach Anspruch 5, **dadurch gekennzeichnet**, daß als frequenzbestimmende Einheit der regelbaren Zeitbasis (34) ein Ringresonator (340) verwendet wird.

8. Vorrichtung nach Ansruch 7, **dadurch gekennzeichnet**, daß zur Temperaturkompensation des Ringresonators (340) eine Regelschaltung vorgesehen ist, bei der ein Temperatursensor (343) über einen ersten Verstärker (344), einen A/D-Wandler (345), einen Digitalspeicher (342), einen D/A-Wandler (347) und einen zweiten Verstärker (347) mit dem Eingang des Ringresonators (340) verbunden ist.

FIG. 1

FIG. 2

**FIG. 5**

**FIG. 3**

**FIG. 6**

RHEINMETALL GMBH

FIG. 4

RHEINMETALL GMBH

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,P | EP-A-0 300 255 (OERLIKON-BÜHRLE)<br>* Spalte 1, Zeilen 1-11; Spalte 3,<br>Zeilen 17-58; Spalte 4, Zeilen 1-19;<br>Figur 1 *<br>--- | 1,3 | F 42 C 17/04<br>G 01 P 3/66 |
| A,D | DE-A-3 307 785 (WEGNER)<br>* Seite 6, Absatz 3; Seite 8, Absätze<br>1-3; Seite 11, Absätze 8,9,12,13,14;<br>Seite 15, Absatz 1; Figuren 1-4 *<br>--- | 1,5,6 | |
| A,D | DE-A-2 605 374 (OERLIKON-BUHRLE)<br>* Seite 3, Absätze 4,5; Seite 4, Absatz<br>1; Seite 5, letzte Absatz; Seite 6;<br>Seite 7, Absatz 1; Seite 9, Absatz 5;<br>Seite 10, Absatz 1; Seite 15, Absatz 4;<br>Seite 16, Absatz 1; Figuren 1,2 *<br>--- | 1,3 | |
| A | GB-A-2 034 011 (MEFINA)<br>* Insgesamt *<br>--- | 1 | |
| A | DE-A-2 023 938 (DEUTSCH- FRANZÖSISCH<br>FORSCHUNGSINSTITUT)<br>----- | | RECHERCHIERTE SACHGEBIETE (Int. Cl.5)<br><br>F 42 C<br>G 01 P |

Der vorliegende Recherchenbericht wurde für alle Patentansprüche erstellt

| Recherchenort | Abschlußdatum der Recherche | Prüfer |
|---|---|---|
| DEN HAAG | 04-12-1989 | VAN DER PLAS J.M. |